# EUROPEAN PATENT APPLICATION

(11) **EP 2 891 831 A1**
(43) Date of publication of application: **08.07.2015**
(21) Application number: 13856712.8
(22) Date of filing: 18.11.2013
(51) Int. Cl.: F16H 37/02, F16F 15/134, F16F 15/14

(54) **STEPLESS TRANSMISSION**

(30) Priority: 26.11.2012 JP 2012258014
(71) Applicant: Honda Motor Co., Ltd., Minato-ku Tokyo 107-8556 (JP)
(72) Inventor: YAMAMOTO, Kazuhiko, Wako-shi Saitama 351-0193 (JP); KITAHARA, Takashi, Wako-shi Saitama 351-0193 (JP); SAGAWA, Masaki, Wako-shi Saitama 351-0193 (JP)
(74) Representative: Beder, Jens
(86) International application number: PCT/JP2013/081050
(87) International publication number: WO 2014/080863

(57) **Abstract**

A stepless transmission 100 includes: a primary damper 30 placed between an engine output shaft 21 and an input shaft 11 of a stepless transmission mechanism 10, and elastically connecting the engine output shaft 21 and the input shaft 11; a secondary damper 40 composed of a hub member 41 fixed to the input shaft 11 and a plurality of mass bodies 42 swingably attached to the hub member 41; and a start device 80 provided between external teeth 13a for output and a drive shaft 91.

## Description

### Technical Field

The present invention relates to a stepless transmission.

### Background Art

To suppress fluctuations of torque that is output from an output shaft of an engine, a dynamic vibration absorber (damper device) has been conventionally used. The dynamic vibration absorber is provided with a first mass body (primary mass) connected to the output shaft of the engine and a second mass body (secondary mass) connected to an input shaft of a transmission mechanism via a connection/disconnection mechanism such as a clutch, a torque converter, or the like, and includes a damper spring supporting the two mass bodies so as to be rotatable relative to each other against the action of an attenuation device placed between the two mass bodies. A typical dynamic vibration absorber is formed as a dual mass flywheel in which two flywheel elements constituting a flywheel function as the first and second mass bodies.

A dynamic vibration absorber using a centrifugal force, namely, a centrifugal pendulum dynamic vibration absorber, has been known. In the centrifugal pendulum dynamic vibration absorber, a centrifugal pendulum moves freely in an arc-shaped chamber, and the kinetic energy of the centrifugal pendulum cancels out the kinetic energy of the vibrational component of the centrifugal pendulum. The centrifugal pendulum dynamic vibration absorber has recently been receiving attention as its dynamic vibration absorbing mechanism is simple and can be reduced in weight. For example, in the dynamic vibration absorber described in Patent Literature 1, the flywheel element on the transmission mechanism side functions as the second mass body.

### Citation List

### Patent Literature

Patent Literature 1: Japanese Patent No. 4797176

### Summary of the Invention

### Technical Problem

The second mass body needs to have a certain amount of mass, in order to deliver favorable vibration suppression performance in a low frequency domain of about 1000 rpm or less such as when the engine is idling. The centrifugal pendulum dynamic vibration absorber described in Patent Literature 1 uses the flywheel element on the transmission mechanism side as the second mass body. This is problematic in that increasing the weight of the flywheel element on the transmission mechanism side to deliver favorable vibration suppression performance in the low frequency domain causes an increase in weight of the dynamic vibration absorber and thus the entire transmission including the dynamic vibration absorber.

In view of the above, the present invention has an object of providing a stepless transmission that can be reduced in weight while ensuring favorable vibration suppression performance in the low frequency domain.

### Solution to Problem

[1] To achieve the object stated above, the present invention is a stepless transmission including: a primary damper placed between an output shaft of a drive source and an input shaft for inputting a drive force of the drive source output from the output shaft into a stepless transmission mechanism, and elastically connecting the output shaft and the input shaft; a secondary damper composed of a hub member fixed to the input shaft and a plurality of mass bodies swingably attached to the hub member; and a start device provided between an output member of the stepless transmission mechanism and a transmission output member that is an output member to a wheel.

According to the present invention, the drive source and the stepless transmission mechanism are connected via the primary damper and the secondary damper, so that the inertia of the stepless transmission mechanism constantly functions as the second mass body (secondary mass) of the secondary damper that has a structure as a centrifugal pendulum dynamic vibration absorber. The secondary damper therefore delivers favorable vibration suppression performance, with no need to add a structure that functions as the second mass body.

The sufficient mass of the stepless transmission mechanism serving as the second mass body improves the vibration suppression performance of the secondary damper especially in the low frequency domain without an increase in weight of the entire transmission, as compared with the case where a flywheel element is used as the second mass body as described in Patent Literature 1.

[2] In the present invention, it is preferable that the start device includes a clutch.

[3] For example, the start device may be composed of: a planetary gear mechanism composed of first to third rotary elements that are a sun gear, a carrier, and a ring gear; and first and second clutches, wherein the first rotary element is connected to a first output member that is an output member for extracting output from the stepless transmission mechanism, wherein the second rotary element is connected to a second output member that is connected to the input shaft downstream of the secondary damper in a transmission direction of the drive force from the drive source, wherein the third rotary element is connected to the transmission output member, wherein the first clutch disengageably connects the first output member and the transmission output member, and wherein the second clutch disengageably connects the third rotary element and the transmission output member.

With such a structure, a connection/disconnection mechanism such as a start clutch is not used as the start device, and starting can be performed by the planetary gear mechanism without operating the first and second clutches. Hence, very little heat is generated during starting. Since there is no need to take into consideration the temperature rise of the secondary damper during starting, a member made of a low heat resistance material, e.g. a resin, can be used as the secondary damper. The weight of the stepless transmission can be reduced in this way.

Starting may be performed by switching the states of the first and second clutches, instead of by the planetary gear mechanism. In this case, if the first and second clutches are positioned away from the secondary damper, the temperature of the secondary damper does not rise much during starting, and so a member made of a low heat resistance material can be used as the secondary damper.

[4] In the present invention, the start device may be composed of a planetary gear mechanism composed of first to third rotary elements that are a sun gear, a carrier, and a ring gear, wherein the first rotary element is connected to a first output member that is an output member for extracting output from the stepless transmission mechanism, wherein the second rotary element is connected to a second output member that is connected to the input shaft downstream of the secondary damper in a transmission direction of the drive force from the drive source, and wherein the third rotary element is connected to the transmission output member.

With such a structure, a connection/disconnection mechanism such as a start clutch is not used as the start device and also the above-mentioned first and second clutches are not included, and starting can be performed by the planetary gear mechanism. Hence, very little heat is generated during starting. Since there is no need to take into consideration the temperature rise of the secondary damper during starting, a member made of a low heat resistance material can be used as the secondary damper.

[5] In the present invention, it is preferable that the step less transmission mechanism is toroidal.

### Brief Description of Drawings

FIG. 1 is a skeleton diagram illustrating a stepless transmission according to Embodiment 1 of the present invention.
FIG. 2 is an alignment chart of a planetary gear mechanism.
FIG. 3 is a skeleton diagram illustrating a stepless transmission according to Embodiment 2 of the present invention.

### Description of Embodiments

The following describes a stepless transmission (continuously variable transmission) 100 according to Embodiment 1 of the present invention with reference to drawings.

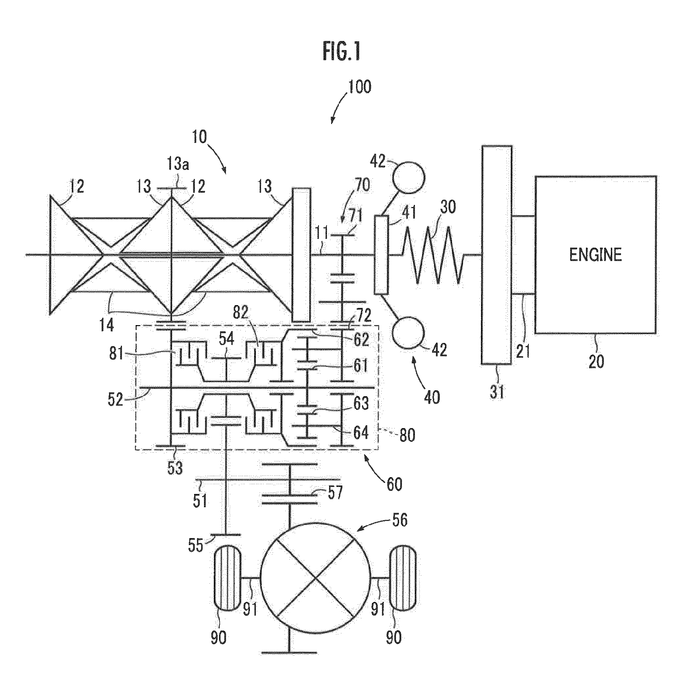

As illustrated in FIG. 1, the stepless transmission 100 includes: a toroidal stepless transmission mechanism 10; and a primary damper 30 and a secondary damper 40 placed between an output shaft (engine output shaft) 21 of an engine 20 which is a drive source and an input shaft 11 of the stepless transmission mechanism 10. The stepless transmission mechanism 10 and the engine output shaft 21 are constantly connected via the two dampers 30 and 40. In other words, an interruption mechanism such as a torque converter is not placed between the stepless transmission mechanism 10 and the engine output shaft 21 so as not to disconnect the transmission path of the drive force from the engine 20 to the stepless transmission mechanism 10.

The stepless transmission 100 also includes: an output shaft 51 placed in parallel with the input shaft 11; an intermediate shaft 52 placed in parallel with the input shaft 11 and the output shaft 51; a planetary gear mechanism 60; and an idle gear train 70.

The toroidal stepless transmission mechanism 10 includes: a pair of input-side discs 12 that are concentric with and rotate integrally with the input shaft 11; output-side discs 13 that are placed between the input-side discs 12 to be concentric with and rotatable with respect to the input shaft 11; and power rollers 14 that are placed between the input-side disc 12 and the output-side disc 13 and transmit motive power between the input-side disc 12 and the output-side disc 13.

The power roller 14 has a rotation shaft to be rotatable so that motive power is transmitted between the input-side disc 12 and the output-side disc 13, and is swingable with respect to a swing shaft (trunnion) that is orthogonal to the rotation shaft and extends in the direction perpendicular to the plane of paper. The transmission gear ratio of the stepless transmission mechanism 10 can be changed by swinging the power roller 14 around the swing shaft to change the angle of tilt.

External teeth 13a for output are provided on the outer periphery of the output-side disc 13. The external teeth 13a mesh with a first transmission gear 53 that is fixed to the intermediate shaft 52 so as to rotate integrally.

The planetary gear mechanism 60 includes the following three elements: a sun gear 61 concentrically fixed to the intermediate shaft 52; a ring gear 62; and a carrier 64 rotatably and revolvably supporting a pinion 63 that meshes with the sun gear 61 and the ring gear 62. Suppose the three elements are referred to as a first element, a second element, and a third element from the sun gear 61 side in an alignment chart in which the relative rotation speed of each element can be expressed by a straight line. Then, the first element is the sun gear 61, the second element is the carrier 64, and the third element is the ring gear 62.

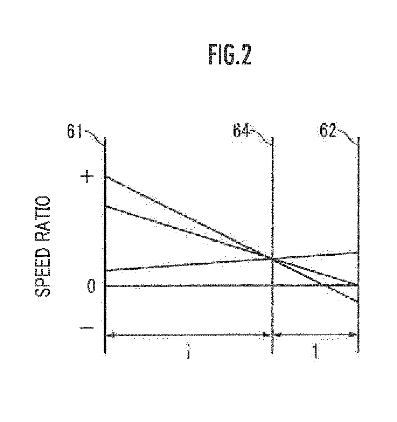

Let i be the gear ratio of the planetary gear mechanism 60 ((the number of teeth of the ring gear 62)/(the number of teeth of the sun gear 61)). In the alignment chart illustrated in FIG. 2, the ratio of the interval between the sun gear 61 and the carrier 64 and the interval between the carrier 64 and the ring gear 62 is set to i:1. The alignment chart is a chart in which the ratios of the relative rotation speeds of the sun gear 61, the carrier 64, and the ring gear 62 can be expressed by straight lines.

The idle gear train 70 includes: a first intermediate gear 71 fixed to the input shaft 11; a second intermediate gear 72 concentric with the intermediate shaft 52 and connected to the carrier (second element); and a third intermediate gear meshing with the first intermediate gear 71 and the second intermediate gear 72 and rotatably supported by a transmission case (not illustrated). A second transmission gear 54 is rotatably supported by the intermediate shaft 52.

The stepless transmission 100 further includes a first clutch 81 and a second clutch 82. The first clutch 81 can be switched between a connection state of connecting the second transmission gear 54 and the first transmission gear 53 and a release state of disconnecting the second transmission gear 54 and the first transmission gear 53. The second clutch 82 can be switched between a connection state of connecting the second transmission gear 54 and the ring gear 62 and a release state of disconnecting the second transmission gear 54 and the ring gear 62.

The first clutch 81 and the second clutch 82 are made of wet multi-plate clutches. The first clutch and the second clutch are, however, not limited to wet multi-plate clutches, and may be other types of clutches.

The second transmission gear 54 meshes with a third transmission gear 55 fixed to the output shaft 51. An output gear 57 that meshes with a differential gear 56 is fixed to the output shaft 51. The output gear 57 corresponds to the transmission output member in the present invention.

The stepless transmission 100 has a low-speed mode for low-speed travel and backward travel, and a high-speed mode for high-speed travel.

Switching between the low-speed mode and the high-speed mode is performed by the first clutch 81 and the second clutch 82. The low-speed mode is established by setting the first clutch 81 in the release state and the second clutch 82 in the connection state. The high-speed mode is established by setting the first clutch 81 in the connection state and the second clutch 82 in the release state. Thus, the first clutch 81 corresponds to a high-speed clutch, and the second clutch 82 corresponds to a low-speed clutch.

In the stepless transmission 100 with the structure described above, the output shaft 51 rotates at a speed and in a direction corresponding to the revolution speed and the revolution direction of the ring gear 62 in the planetary gear mechanism 60. Accordingly, in the low-speed mode, the rotation speed and the rotation direction of the output shaft 51 can be switched between both directions with the stopped state in between, while rotating the input shaft 11 in one direction at a constant speed.

In detail, when the transmission gear ratio of the toroidal stepless transmission mechanism 10 is set to a predetermined value determined by the ratios of the numbers of teeth of the gears 61, 62, and 63 included in the planetary gear mechanism 60, the output shaft 51 can be stopped while the input shaft 11 is kept rotating. In this state, a drive shaft 91 of a pair of right and left wheels 90, which is connected to the output shaft 51 via the output gear 57 and the differential gear 56, is stopped. The geared neutral state can thus be realized.

When the transmission gear ratio of the toroidal stepless transmission mechanism 10 is adjusted to be more decelerated than the predetermined value from the geared neutral state, the drive shaft 91 rotates in the forward direction. When the transmission gear ratio of the toroidal stepless transmission mechanism 10 is adjusted to be more accelerated than the predetermined value from the geared neutral state, the drive shaft 91 rotates in the backward direction. In this way, the rotation speed of the output shaft 51 can be switched between normal rotation and reverse rotation with the stopped state in between. A larger deviation from the predetermined value increases the rotation speed of the drive shaft 91 and speeds up the vehicle.

Thus, the planetary gear mechanism 60, the first clutch 81, and the second clutch 82 constitute a start device 80. The start device 80 is provided between the external teeth 13a for output as an output member of the stepless transmission mechanism 10 and the drive shaft 91, in the drive force transmission direction. The start device 80 is also provided between the first intermediate gear 71 fixed to the input shaft 11 and the drive shaft 91, in the drive force transmission direction. The external teeth 13a for output correspond to the first output member in the present invention, and the first intermediate gear 71 corresponds to the second output member in the present invention.

In the high-speed mode, the rotation of the output-side disc 13 in the toroidal stepless transmission mechanism 10 is transmitted to the output shaft 51 via the planetary gear mechanism 60 and the first clutch 81. The drive shaft 91 connected to the output shaft 51 then rotates in the forward direction. In the high-speed mode, the rotation speed of the drive shaft 91 changes in proportion to the rotation speed of the output-side disc 13.

The primary damper 30 is placed between the engine output shaft 21 and the input shaft 11 of the stepless transmission mechanism 10, and elastically connects the engine output shaft 21 and the input shaft 11. The primary damper 30 is a coil spring as an example, and is fixed to a mass body 31 that is fixedly connected to the engine output shaft 21.

The secondary damper 40 is placed between the primary damper 30 and the input shaft 11 of the stepless transmission mechanism 10, and in particular between the mass body 31 and the input shaft 11. The secondary damper 40 is a centrifugal pendulum dynamic vibration absorber composed of: a hub member 41 fixedly connected to the input shaft 11; and a plurality of mass bodies 42 swingably attached to the hub member 41.

Though the description of the detailed structure of the secondary damper 40 is omitted here, the secondary damper 40 may have, for example, the same structure as the centrifugal pendulum dynamic vibration absorber described in Patent Literature 1. Note, however, that while the transmission-side flywheel element is the second mass body in the centrifugal pendulum dynamic vibration absorber described in Patent Literature 1, no flywheel element functioning as the second mass body is needed in this embodiment.

In the stepless transmission 100 with the structure described above, the engine 20 and the stepless transmission mechanism 10 are connected via the two dampers 30 and 40, so that the inertia of the stepless transmission mechanism 10 constantly functions as the second mass body (secondary mass) of the secondary damper 40 which is a centrifugal pendulum dynamic vibration absorber. The centrifugal pendulum dynamic vibration absorber therefore delivers favorable vibration suppression performance, with no need to add a structure that functions as the second mass body.

The sufficient mass of the stepless transmission mechanism 10 serving as the second mass body improves the vibration suppression performance of the secondary damper 40 as a centrifugal pendulum dynamic vibration absorber whose vibration suppression performance decreases especially in the frequency domain near the idle rotation of the engine 20, as compared with the case where a flywheel element is used as the second mass body as described in Patent Literature 1.

Since there is no need to newly add the second mass body, an increase in weight of the entire stepless transmission 100 is prevented. This enhances the responsiveness to the engine 20, and improves the drivability.

Given that the same vibration suppression performance is achieved, an increase in weight of the entire stepless transmission 100 can also be prevented as compared with the case where the secondary damper 40 as a centrifugal pendulum dynamic vibration absorber is provided in the first mass body 31 or the case where the secondary damper 40 as a centrifugal pendulum dynamic vibration absorber is provided in the first mass body 31 without providing the primary damper 30.

Moreover, a connection/disconnection mechanism such as a start clutch is not used as the start device, and the first clutch 81 and the second clutch 82 are not operated during starting. Hence, very little heat is generated during starting. Since there is no need to take into consideration the temperature rise of the secondary damper 40 during starting, a member made of a low heat resistance material, e.g. a resin, can be used as the secondary damper 40. The weight of the stepless transmission 100 can be reduced in this way, too.

Starting may be performed by switching the states of the first clutch 81 and the second clutch 82 to establish the high-speed mode, instead of starting from the geared neutral state. In this case, the temperature of the secondary damper 40 does not rise much during starting because the first clutch 81 and the second clutch 82 are positioned away from the secondary damper 40, and so a member made of a low heat resistance material, e.g. a resin, can be used as the secondary damper 40.

The following describes a stepless transmission 200 according to Embodiment 2 of the present invention with reference to drawings.

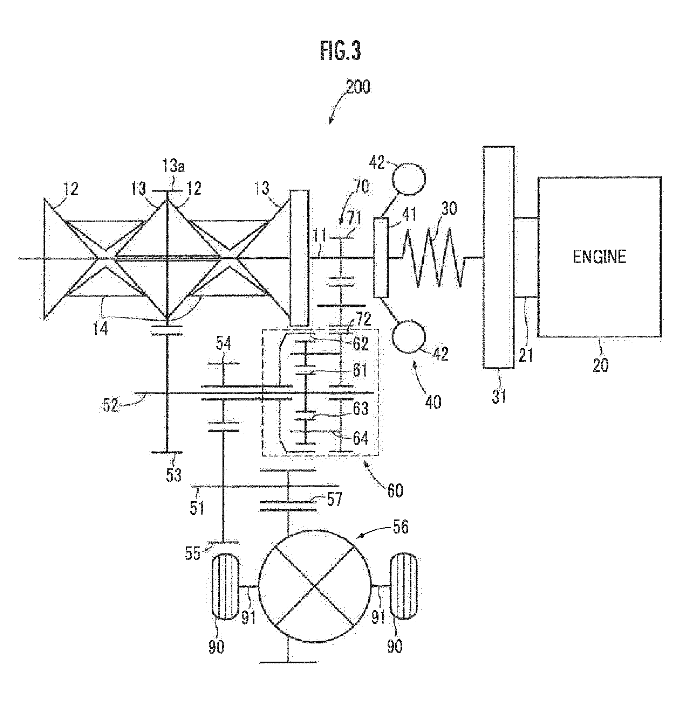

As illustrated in FIG. 3, the structure of the stepless transmission 200 is different from the structure of the stepless transmission 100 according to the foregoing Embodiment 1 in that the first clutch 81 and the second clutch 82 are not included. The second transmission gear 54 and the first transmission gear 53 are constantly in the release state, and the second transmission gear 54 and the ring gear 62 are constantly connected. Thus, the stepless transmission 200 has the same structure as in the case where the second clutch 82 is constantly in the connection state and the first clutch 81 is constantly in the release state in the stepless transmission 100.

The stepless transmission 200 with the structure described above has only a mode corresponding to the low-speed mode of the stepless transmission 100, and does not have a mode corresponding to the high-speed mode of the stepless transmission 100.

In the stepless transmission 200 as in the stepless transmission 100, the inertia of the stepless transmission mechanism 10 constantly functions as the second mass body (secondary mass) of the secondary damper 40 which is a centrifugal pendulum dynamic vibration absorber. The centrifugal pendulum dynamic vibration absorber therefore delivers favorable vibration suppression performance, with no need to add a structure that functions as the second mass body. The vibration suppression performance of the secondary damper 40 as a centrifugal pendulum dynamic vibration absorber whose vibration suppression performance decreases especially in the low frequency domain can be improved.

Moreover, a connection/disconnection mechanism such as a start clutch is not used as the start device, and the first clutch 81 and the second clutch 82 included in the stepless transmission 100 are omitted. Hence, very little heat is generated during starting. Since the temperature of the secondary damper 40 rises little during starting, a member made of a low heat resistance material can be used as the secondary damper 40. The weight of the stepless transmission 200 can be reduced in this way, too.

Though the foregoing embodiments describe the case where the drive source is the engine 20, the drive source in the present invention is not limited to an engine, and may be an electric motor such as a motor generator.

Though the foregoing embodiments describe the case where the stepless transmission mechanism 10 is toroidal, the stepless transmission mechanism in the present invention is not particularly limited so long as it is constantly connected to the output shaft of the drive source, and other types of stepless transmission mechanisms may be used.

### Description of Reference Numerals

- 10: stepless transmission mechanism
- 11: input shaft
- 12: input-side disc
- 13: output-side disc
- 13a: external teeth (first output member)
- 14: power roller
- 20: engine (drive source)
- 21: output shaft, engine output shaft
- 30: primary damper
- 31: first mass body (primary mass)
- 40: secondary damper
- 41: hub member
- 42: mass body
- 51: output shaft
- 52: intermediate shaft
- 53: first transmission gear
- 54: second transmission gear
- 55: third transmission gear
- 56: differential gear
- 57: output gear (transmission output member)
- 60: planetary gear mechanism
- 61: sun gear (first element)
- 62: ring gear (third element)
- 63: pinion
- 64: carrier (second element)
- 70: idle gear train
- 71: first intermediate gear (second output member)
- 72: second intermediate gear
- 80: start device
- 81: first clutch, high-speed clutch (first clutch)
- 82: second clutch, low-speed clutch (second clutch)
- 90: wheel
- 91: drive shaft
- 100, 200: stepless transmission

## Claims

1. A stepless transmission comprising:
a primary damper placed between an output shaft of a drive source and an input shaft for inputting a drive force of the drive source output from the output shaft into a stepless transmission mechanism, and elastically connecting the output shaft and the input shaft;
a secondary damper composed of a hub member fixed to the input shaft and a plurality of mass bodies swingably attached to the hub member; and
a start device provided between an output member of the stepless transmission mechanism and a transmission output member that is an output member to a wheel.

2. The stepless transmission according to claim 1, wherein the start device includes a clutch.

3. The stepless transmission according to claim 1 or 2, wherein the start device is composed of: a planetary gear mechanism composed of first to third rotary elements that are a sun gear, a carrier, and a ring gear; and first and second clutches,
wherein the first rotary element is connected to a first output member that is an output member for extracting output from the stepless transmission mechanism,
wherein the second rotary element is connected to a second output member that is connected to the input shaft downstream of the secondary damper in a transmission direction of the drive force from the drive source,
wherein the third rotary element is connected to the transmission output member, wherein the first clutch disengageably connects the first output member and the transmission output member, and
wherein the second clutch disengageably connects the third rotary element and the transmission output member.

4. The stepless transmission according to claim 1, wherein the start device is composed of a planetary gear mechanism composed of first to third rotary elements that are a sun gear, a carrier, and a ring gear,
wherein the first rotary element is connected to a first output member that is an output member for extracting output from the stepless transmission mechanism,
wherein the second rotary element is connected to a second output member that is connected to the input shaft downstream of the secondary damper in a transmission direction of the drive force from the drive source, and
wherein the third rotary element is connected to the transmission output member.

5. The stepless transmission according to any one of claims 1 to 4, wherein the stepless transmission mechanism is toroidal.
